# EUROPÄISCHE PATENTSCHRIFT

(11) **EP 2 932 684 B1**
(45) Veröffentlichungstag und Bekanntmachung des Hinweises auf die Patenterteilung: **11.04.2018**
(21) Anmeldenummer: 13814481.1
(22) Anmeldetag: 11.12.2013
(51) Int. Cl.: H04L 29/08, H04L 12/46, H04L 12/40, H04L 12/24

(54) **VERFAHREN ZUM AUSTAUSCH VON GERÄTESPEZIFISCHEN DATEN ZWISCHEN GERÄTEN UND/ODER SYSTEMEN VERSCHIEDENER NETZWERKSYSTEME SOWIE BUSSYSTEM ZUR DURCHFÜHRUNG DES VERFAHRENS**
METHOD FOR THE INTERCHANGE OF DEVICE-SPECIFIC DATA BETWEEN DEVICES AND/OR SYSTEMS OF VARIOUS NETWORK SYSTEMS, AND BUS SYSTEM FOR PERFORMING SAID METHOD
PROCÉDÉ D'ÉCHANGE DE DONNÉES, SPÉCIFIQUES À UN APPAREIL, ENTRE DES APPAREILS ET/OU DES SYSTÈMES DE DIFFÉRENTS SYSTÈMES DE RÉSEAU AINSI QUE BUS POUR LA MISE EN OEUVRE DUDIT PROCÉDÉ

(30) Priorität: 13.12.2012 DE 102012112225
(43) Veröffentlichungstag der Anmeldung: 21.10.2015
(73) Patentinhaber: Schneider Electric Automation GmbH, 97828 Marktheidenfeld (DE)
(72) Erfinder: PATRI, Michael, 63741 Aschaffenburg (DE)
(74) Vertreter: Stoffregen, Hans-Herbert
(86) Internationale Anmeldenummer: PCT/EP2013/076206
(87) Internationale Veröffentlichungsnummer: WO 2014/090866

(56) Entgegenhaltungen:
- Peter Neumann ET AL: "Architectural Concept of Virtual Automation Networks", , 11. Juli 2008 (2008-07-11), XP055103014, DOI: 10.3182/20080706-5-KR-1001.1743 Gefunden im Internet: URL:http://dx.doi.org/10.3182/20080706-5 [gefunden am 2014-02-19]
- Hermann Himmelbauer: "SOAP Interface For An Internet/Fieldbus Gateway", , 7. September 2006 (2006-09-07), XP055102925, Gefunden im Internet: URL:http://violin.qwer.tk/dusty/thesis/soa p_if_inet-fan.pdf [gefunden am 2014-02-18]
- RALF MESSERSCHMIDT ET AL: "Integrated web services and tunneling enabling field bus communication via heterogeneous (wide area) networks", INDUSTRIAL INFORMATICS (INDIN), 2010 8TH IEEE INTERNATIONAL CONFERENCE ON, IEEE, PISCATAWAY, NJ, USA, 13. Juli 2010 (2010-07-13), Seiten 543-548, XP031733677, ISBN: 978-1-4244-7298-7

## Beschreibung

Die Erfindung bezieht sich auf ein Verfahren nach dem Oberbegriff des Anspruchs 1 sowie auf ein Bussystem nach dem Oberbegriff des Anspruchs 4.

Ein Verfahren der eingangs genannten Art sowie ein Bussystem zur Durchführung des Verfahrens ist in der US 2002/0016815 A1 beschrieben. Diese bezieht sich auf ein Kommunikationssystem für Automationseinrichtungen über ein TCP/IP-Netzwerk. Die Automationseinrichtungen steuern eine Automationsanwendung durch Ausführung eines Anwenderprogramms. Das Kommunikationssystem umfasst zumindest einen Empfangs-Web-Funktionsblock, der in dem Anwenderprogramm integriert ist, um eine Web-Server-Funktion zu implementieren und/oder zumindest einen Sende-Web-Funktionsblock, der in dem Anwenderprogramm integriert ist, um eine Web-Client-Funktion und ein HTTP-Interface zu implementieren, welches geeignet ist, um Nachrichten zwischen dem TCP/IP-Netzwerk und den Web-Funktionsblöcken, die durch eine URL-Adresse identifiziert werden, zu routen. Der Inhalt einer HTTP-Anfrage kann einen XML-Rahmen oder einen URL-codierten Rahmen umfassen.

Serielle Feldbusse basieren auf Kommunikationsprinzipien, die in verschiedenen Protokoll-Ausführungen wie Modbus, Profibus oder DeviceNet zur Verfügung stehen. Die meisten der Feldbusse verwenden das Master-Slave-Prinzip, wobei ein Master-Gerät Daten von einem oder mehreren Slave-Geräten anfragt, indem das Master-Gerät eine Anfrage (Request) sendet, auf welche die Slave-Geräte mit einer Antwort (Response) reagieren.

Ein Verfahren der eingangs genannten Art ist aus der DE 10 2008 039 697 A1 bekannt. Dabei steht eine übergeordnete Einheit eines ersten Netzwerksystems über ein HSE-Server (HSE: High Speed Ethernet; Hochgeschwindigkeits-Ethernet) über eine Hochgeschwindigkeits-Ethernet-Verbindung mit einem Gateway und/oder einem Linking Device eines zweiten Netzwerksystems in Kommunikationsverbindung. Das Gateway und/oder das Linking Device ist/sind an einem Feldbus-System angeschlossen oder anschließbar. Daten, die zwischen dem HSE-Server und dem Gateway bzw.

Linking Device über die Hochgeschwindigkeits-Ethernet-Verbindung kommuniziert werden, werden dabei zumindest teilweise in einer Datenbank gespeichert.

Bei bekannten seriellen Feldbus-Systemen existiert eine direkte Verbindung zwischen dem Master-Gerät und den Slave-Geräten. Die DE 10 2009 027 697 A1 bezieht sich auf ein System zur Steuerung und/oder Überwachung einer Prozessanlage in der Automatisierungstechnik mit einer übergeordneten Steuereinheit und mit zumindest einem Ethernet-fähigen Feldgerät, wobei die Steuereinheit und das Feldgerät über eine Ethernet-Verbindung, auf der das Ethernet-Protokoll läuft, miteinander verbunden sind. Der Steuereinheit ist ein Bediensoftware-Modul zugeordnet, das sowohl zur Bedienung über einen Feldbus der Prozessautomatisierungstechnik mittels eines Feldbus-Protokolls, als auch zur Bedienung über Ethernet mittels des Ethernet-Protokolls dient. Ferner ist dem Feldgerät eine Kommunikationsschnittstelle zugeordnet, die das entsprechende Feldbus-Protokoll auf das Ethernet-Protokoll abbildet, so dass die Steuereinheit direkt über die Ethernet-Verbindung mit dem Feldgerät kommuniziert.

Bei dieser Ausführungsform erfolgt das Tunneln des Feldbus-Protokolls, z. B. des HART-Protokolls, im Ethernet-Protokoll, d.h. das Ethernet-Protokoll dient als Container für die Übertragung des Feldbus-Protokolls.

Der Artikel von P. Neumann et al.: "Architectural Concept of Virtual Automation Network", Proceedings of the 17th World Congress, Seoul, Korea, July 6-11,2008, S. 13964 - 13969, bezieht sich auf eine offene Systemarchitektur und erste Implementationsschritte zur Realisierung eines virtuellen Automations-Netzwerks (virtual automation network). Das Ziel des virtuellen Automations-Netzwerks ist die Bereitstellung eines Datentransfers durch ein heterogenes Kommunikationsnetzwerk aus Sicht einer Automations-Applikation. Bei diesem Ansatz müssen Feldgeräte eines Feldbusses "VAN-kompatibel" gestaltet werden, indem ein sogen. VAN-virtual device erzeugt wird, durch welches die Feldgeräte repräsentiert werden.

Die Bildung eines VAN-virtual-device ist mit hohem Aufwand und Speicherplatz verbunden.

Davon ausgehend liegt der vorliegenden Erfindung die Aufgabe zugrunde, ein Verfahren der eingangs genannten Art derart weiterzubilden, dass die Übertragung von Daten zwischen räumlich getrennten Feldbussen beschleunigt, insbesondere das Datenvolumen der zu übertragenden Daten reduziert wird.

Die Aufgabe wird erfindungsgemäß durch die Merkmale der Ansprüche 1 bzw. 4 gelöst.

Für den Austausch von seriellen Daten werden vorzugsweise Web-Service-Telegramme verwendet. Die Übertragung erfolgt mit Hilfe von Tunneling oder der Umsetzung des seriellen Feldbus-Protokolls in ein Web-Service-Protokoll und umgekehrt.

Das mit der übergeordneten Einheit verbundene Gateway ist Feldbus-seitig als Feldbus-Slave und Ethernet-seitig als Web-Service-Client ausgebildet, während das mit den untergeordneten Einheiten des ersten Feldbussystems verbundene Gateway Feldbusseitig als Feldbus-Master und Ethernet-seitig als Web-Service-Server ausgebildet ist.

Mit anderen Worten: in dem ersten Gateway sind Feldbus-Slave- und Web-Service-Client-Funktionalitäten und in dem zweiten Gateway Feldbus-Master- und Web-Service-Server-Funktionalitäten implementiert.

In dem Web-Service-Client ist ein Speicherelement implementiert, in welchem
a). Konfigurationsdaten der Feldbus-Slaves und benötigte Daten wie Gerätedaten sowie
b). die aktuellen Werte der benötigten Daten
gespeichert werden.

Über das Speicherelement (Datenbank) erfolgen vorzugsweise nur Lesezugriffe. Speicherzugriffe erfolgen über einen expliziten Request.

Dazu sind in dem Web-Service-Server und in dem Web-Service-Client Ereignis-Mechanismen (Eventing Mechanism) implementiert, um die aktuellen Werte der in dem Speicherelement abgelegten Daten der Feldgeräte-Slaves auszutauschen.

Gemäß einer besonders bevorzugten Ausführungsform ist vorgesehen, dass der Web-Service-Server die Feldgeräte-Slaves nach diesen Datenwerten abfragt (Polling) und Datenänderungen mittels des Ereignis-Mechanismus an den Web-Service-Client überträgt, wobei die Daten in dem Speicher aktualisiert werden und wobei die aktuellen Werte der Daten über den Feldbus-Master des zweiten Netzwerksystems unmittelbar in der Datenbank des Web-Service-Client abgefragt werden können, ohne dass eine Verbindung mit dem Feldbus-Slave des ersten Netzwerksystems besteht.

Gegenüber dem Stand der Technik wird der Vorteil erreicht, dass aufgrund der Trennung des Datenaustausch-Mechanismus in einen "Standard-Daten"- und einen "Extraordinary-Daten"-Übertragungs-Mechanismus unmittelbar eine Master-Anfrage mit den verfügbaren letzten Daten (Standard Data Exchange) zu beantworten, ohne die Daten nochmals anzufragen und/oder zusätzliche Daten anzufragen, die nicht in der Abfrage-Schleife (Polling Loop) enthalten sind. Mittels des "Extraordinary-Daten"-Übertragungs-Mechanismus ist ein Feldbus-Master jedoch auch in der Lage, jeden Feldbus-Slave-Parameter zu lesen, auch wenn dieser nicht in der Datenbank abgelegt ist bzw. zu beschreiben, je nach Zugriffsrecht.

Ein weiterer Vorteil besteht darin, dass der Feldbus-Master und die Feldbus-Slaves nicht innerhalb desselben Feldbus-Abschnittes enthalten sein müssen. Vielmehr können diese über ein anderes Medium getrennt sein, welches verwendet wird, um die korrespondierenden Daten zu übertragen, die in der Web-Service-Nachricht eingebettet sind. Der Feldbus-Master und der Feldbus-Slave müssen nicht mit derselben Feldbus-Technologie verbunden sein.

Folglich können Distanzen des Feldbussystems, basierend auf der gegebenen Infrastruktur, vergrößert werden und sind damit nicht auf ein physikalisches Limit des jeweiligen Feldbusses beschränkt.

Die "Timings" der angeschlossenen Feldbusse werden eingehalten, z. B. konfigurierte Time-Out-Werte. Bei Echtzeit-Anwendungen kann das erfindungsgemäße Verfahren in Abhängigkeit der Latenzzeit eingesetzt werden, die für den Datenaustausch über den Web-Service-Tunnel benötigt wird. Diese ist abhängig von der physikalischen Schicht und der Implementierung der Kommunikation.

Um einem Benutzer die Kommunikation über ein Intranet oder selbst das Internet zu erlauben, ist eine Autorisierung und Authentifizierung notwendig.

Das erfindungsgemäße Verfahren erlaubt die Integration von Web-Services in ein unteres Kommunikationslevel der industriellen Automation.

Des Weiteren bezieht sich die Erfindung auf ein Bussystem zum Austausch von gerätespezifischen Daten zwischen Feldbus-Slaves eines ersten Feldbusses und zumindest einem Feldbus-Master eines zweiten Feldbusses, wobei der erste Feldbus über ein erstes Gateway und der zweite Feldbus über ein zweites Gateway mit einem gemeinsamen Ethernet-Netzwerk gekoppelt ist, wobei das mit den Feldbus-Slaves verbundene erste Gateway feldbusseitig als Feldbus-Master und ethernetseitig als Web-Service-Server ausgebildet ist, wobei das mit dem Feldbus-Master verbundene zweite Gateway feldbusseitig als Feldbus-Slave und ethernetseitig als Web-Service-Client ausgebildet ist, wobei jedes der Gateways ein Datentransformations-Modul zur Transformation der empfangenen Feldbus-Nachrichten in Web-Service-Nachrichten und zur Transformation empfangener Web-Service-Nachrichten in Feldbus-Nachrichten aufweist. Das System zeichnet sich dadurch aus, dass der Web-Service-Client eine Datenbank aufweist, in der Konfigurationsdaten und benötigte Daten der Feldbus-Slaves sowie aktuelle Datenwerte der benötigten Daten gespeichert sind.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines den Figuren zu entnehmenden bevorzugten Ausführungsbeispiels.

Es zeigen:
- Fig. 1: eine schematische Darstellung eines Feldbus-Systems mit zumindest zwei Feldbussen, die über jeweils ein Gateway mit einem Ethernet verbunden sind,
- Fig. 2: eine schematische Darstellung eines ersten Gateways als Web-Service-Server,
- Fig. 3: eine schematische Darstellung eines zweiten Gateways als Web-Service-Client,
- Fig. 4: eine schematische Darstellung einer ersten Kommunikationssequenz zwischen Feldbus-Master und Feldbus-Slave mit Abfrage von Datenänderungen der Feldbus-Slaves durch den Web-Service-Server,
- Fig. 5: eine schematische Darstellung einer zweiten Kommunikationssequenz betreffend eine direkte Kommunikation zwischen Feldbus-Master und Feldbus-Slave,
- Fig. 6: ein schematisches Ablaufdiagramm einer Datenaustauschsequenz nach Aussenden eines Feldbus-Master-Requests,
- Fig. 7a, b: ein schematisches Ablaufdiagramm von Verfahrensschritten einer Datenaustauschsequenz mit Datenbank-Aktualisierung und Datenbank-Abfrage und
- Fig. 8: ein schematisches Ablaufdiagramm einer Datenaustauschsequenz ohne Datenbank-Abfrage.

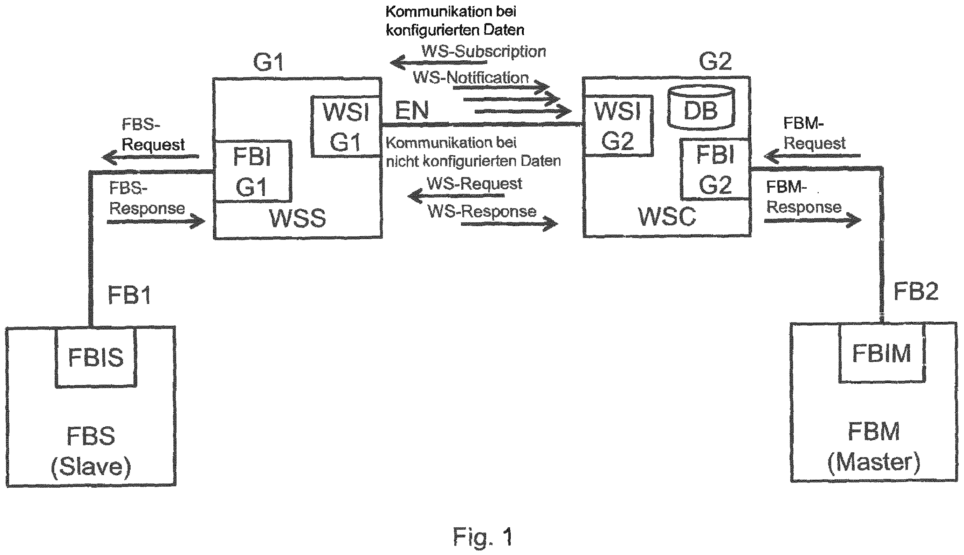

Fig. 1 zeigt rein schematisch ein Feldbus-System FBS, umfassend ein erstes Netzwerksystem wie Feldbus FB1 und zweites Netzwerksystem wie Feldbus FB2, wobei die Feldbusse FB1, FB2 jeweils über ein Gateway G1, G2 mit einem gemeinsamen Ethernet-Netzwerk EN gekoppelt sind. Der erste Feldbus FB1 umfasst zumindest einen Feldbus-Slave FBS, der über ein Feldbus-Interface FBIS mit dem ersten Feldbus FB1 verbunden ist sowie das als Web-Service-Server WSS ausgebildete Gateway G1, welches über ein Feldbus-Interface FBIG1 mit dem ersten Feldbus FB1 gekoppelt ist. Ferner ist der Web-Service-Server WSS mit einem Web-Service-Interface WSI mit dem Ethernet-Netzwerk EN gekoppelt.

Der zweite Feldbus FB2 umfasst zumindest einen Feldbus-Master FBM, der über ein Feldbus-Interface FBIM mit dem zweiten Feldbus FB2 verbunden ist sowie das zweite Gateway G2, welches über ein Feldbus-Interface FBIG2 mit dem zweiten Feldbus FB2 und über ein Web-Service-Interface WSI als Web-Service-Client WSC mit dem Ethernet-Netzwerk EN verbunden ist.

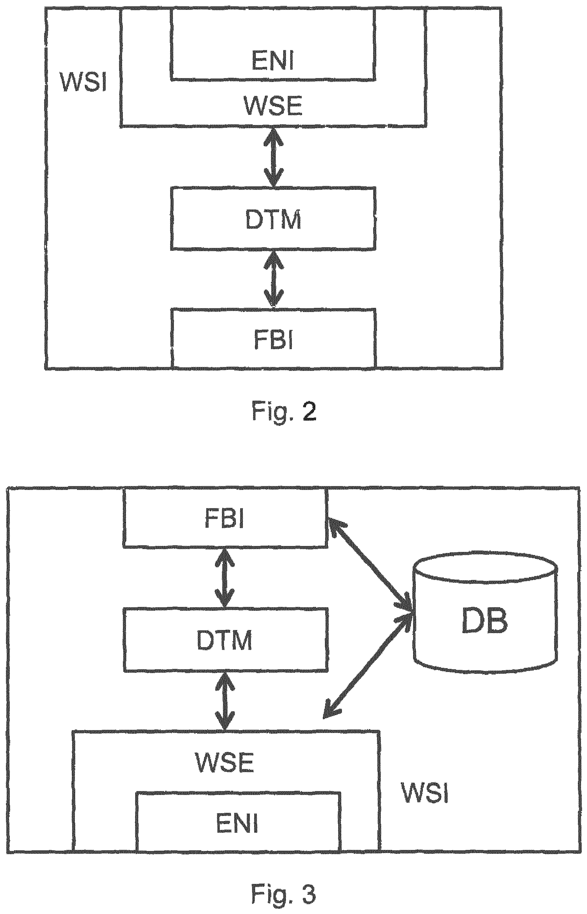

Die Fig. 2 und 3 zeigen rein schematisch die Struktur der Gateways G1, G2, die zum schnellen Austausch von seriellen Feldbus-Daten mittels Web-Service-Technologie verwendet werden. Für einen derartigen Datenaustausch von Feldbus-Daten sind gemäß der Erfindung nur zwei Gateways G1, G2 notwendig, wobei in dem ersten Gateway G1 eine Web-Service-Server- und eine Feldbus-Master-Funktionalität und in dem zweiten Gateway G2 eine Web-Service-Client- und eine Feldbus-Slave-Funktionalität implementiert ist.

Fig. 2 zeigt die Struktur des Gateways G1, welches das Feldbus-Interface FBIG1, ein Datentransformations-Modul DTM sowie das Web-Service-Interface WSIG1 umfasst. Das Web-Service-Interface WSIG1 umfasst im vorliegenden Ausführungsbeispiel ein Ethernet-Interface ENI sowie einen Web-Service-Endpoint WSEG1. Das Gateway G1 als Web-Service-Server WSS wird zur Verbindung mit dem zumindest einen Feldbus-Slave FBS verwendet. Die von dem Web-Service-Server WSS über das Ethernet-Netzwerk EN empfangenen Web-Service-Anfragen wie WS-Subscription WS-SUB oder WS-Request WS-REQ werden in dem Datentransformations-Modul DTM in eine entsprechende Feldbus-Anfrage wie FBS-Request FBS-REQ transformiert und zu dem entsprechenden Feldbus-Slave FBS gesendet. Die entsprechende Feldbus-Antwort wie FBS-Response FBS-RES wird durch das Feldbus-Interface FBIG1 empfangen, in dem Datentransformations-Modul DTM in die entsprechende Web-Service-Antwort wie WS-Notification WS-NOT oder WS-Response WS-RES transformiert und zu dem anfragenden Web-Service-Client WSC zurückgesendet.

Fig. 3 zeigt rein schematisch die Struktur des Gateways G2 als Web-Service-Client WSC. Das Web-Service-Interface WSI umfasst ein Ethernet-Interface ENI sowie einen Web-Service-Endpoint WSE, welcher über ein Datentransformations-Modul DTM mit dem Feldbus-Interface FBI verbunden ist. Sowohl der Web-Service-Endpoint WSE als auch das Feldbus-Interface FBI haben Zugriff auf eine Datenbank DB. Die Feldbus-Nachrichten können intern in entsprechende Web-Service-Nachrichten transformiert werden. Falls die von dem Feldbus-Master angeforderten Daten bereits in der Datenbank DB verfügbar sind, kann unmittelbar auf die Feldbus-Anfrage geantwortet werden.

In der Datenbank DB des Web-Service-Client WSC sind Daten der Feldbus-Slaves gespeichert. Ferner ist konfiguriert, welche Daten üblicherweise zwischen dem Feldbus-Master FBM und dem Feldbus-Slave FBS ausgetauscht werden müssen und wie der Zugriff auf diese Daten freigegeben wird. Der Web-Service-Client WSC informiert den Web-Service-Server WSS darüber, dass dieser an jeder Art von Änderungen von Daten der Datenbank DB interessiert ist. Dies erfolgt durch Senden einer Web-Service-Subscription-Nachricht WS-SUB durch den Web-Service-Client WSC.

Die Bestellung (Subscription) wird durch den Web-Service-Server WSS bestätigt, sofern diese erfolgreich ausgeführt werden kann. Der Web-Service-Server WSS fragt die entsprechenden Daten von den mit dem Feldbus FB1 verbundenen Feldbus-Slaves FBS in einer kontinuierlichen Art und Weise durch Aussenden einer Feldbus-Anfrage FBS-Request FBS-REQ an die Feldbus-Slaves FBS ab. Die Feldbus-Slaves FBS senden eine Feldbus-Antwort FBS-Response FBS-RES an den Web-Service-Server zurück.

Wenn sich einige der bestellten Daten in der Zwischenzeit ändern, wird der Web-Service-Server WSS den Web-Service-Client WSC über die Änderungen durch Aussenden einer Web-Service-Notification-Nachricht WS-NOT über das Web-Service-Interface WSIG1 informieren. Folglich ist der Web-Service-Client WSC über jede Datenänderung informiert und hat immer die neuesten Datenwerte in der Datenbank DB zur Verfügung.

Wenn der mit dem Feldbus FB2 verbundene Feldbus-Master FBM eine Feldbus-Anfrage FBM-Request FBM-REQ an den Web-Service-Client WSC über das Feldbus-Interface FBIM sendet, um Daten der Feldbus-Slaves abzufragen, kann der Web-Service-Client WSC unmittelbar die aktuellen Daten aus der Datenbank DB entnehmen, ohne diese nochmals anzufragen und zu dem Feldbus-Master FBM durch eine Feldbus-Antwort FBM-Response FBM-RES über das Feldbus-Interface FBI zurücksenden.

Nachfolgend wird ein Datenaustausch beschrieben, der durch den Feldbus-Master FBM initiiert wird und wobei benötigte Daten nicht in der Datenbank DB enthalten sind.

Der mit dem zweiten Feldbus FB2 verbundene Feldbus-Master FBM sendet über das Feldbus-Interface FBIM eine Feldbus-Anfrage FBM-Request FBM-REQ. Diese wird von dem Feldbus-Interface FBIG2 des Web-Service-Client WSC gelesen und mittels des Datentransformations-Moduls DTM in eine entsprechende Web-Service-Request-Nachricht WS-REQ transformiert. Nach Empfang der Web-Service-Nachricht WS-REQ durch den Web-Service-Server WSS wird die Web-Service-Nachricht mittels des Datentransformations-Moduls DTM wieder in die entsprechende Feldbus-Anfrage FBS-Request FB-REQ transformiert und zu dem Feldbus-Slave FBS gesendet.

Der Feldbus-Slave FBS verarbeitet die Anfrage und sendet eine Feldbus-Antwort FBS-Response FBS-RES zurück. Der Web-Service-Server WSS transformiert die empfangene Feldbus-Antwort FBS-RES in eine Web-Service-Response-Nachricht WS-RES und sendet diese über das Web-Service-Interface zu dem Web-Service-Client WSC, der wiederum die Nachricht in eine entsprechende Feldbus-Antwort FBM-Response FBM-RES transformiert und diese zu dem Feldbus-Master FBM weiterleitet, welcher auf die Antwort wartet. Dieser Kommunikations-Mechanismus wird ebenfalls verwendet, um Steuerbefehle (Commands) zu dem Feldbus-Slave FBS zu senden.

Folglich weist der Web-Service-Client WSC auf der Feldbus-Seite eine Slave-Funktionalität und auf der Web-Service-Seite eine Client-Funktionalität auf. Entsprechend ist der Web-Service-Server WSS auf der Feldbus-Seite mit einer Master-Funktionalität und auf der Web-Service-Seite mit einer Server-Funktionalität ausgestattet.

Aufgrund der Tatsache, dass der Web-Service-Sever WSS Feldbus-Master-Funktionalität benötigt, muss diese Funktionalität entweder in dem existierenden Feldbus-Master FBM des ersten Feldbusses FB1, in dem nur Einzel-Master durch die Feldbus-Technologie unterstützt werden, oder in einem beliebigen existierenden oder neu hinzufügbaren Feldgerät bei Systemen, in denen Mehrfach-Master durch die Feldbus-Technologie wie z. B. CAN erlaubt sind, um den Austausch von Daten über Web-Services während der Laufzeit zu ermöglichen.

Um den Web-Service-Server WSS mit einem Feldbus-Slave FBS zu verbinden, welcher nicht durch irgendeinen Feldbus-Master FBM zum Zeitpunkt des Zugriffs kontrolliert wird, ist die Lokalisierung der Web-Service-Funktionalität des Web-Service-Servers unabhängig von der Feldbus-Technologie.

Das Ziel der Erfindung ist der Austausch von Daten zwischen Feldbus-Slaves und entsprechenden Diagnose-Systemen z. B. zur Anzeige von Messwerten für einen Benutzer.

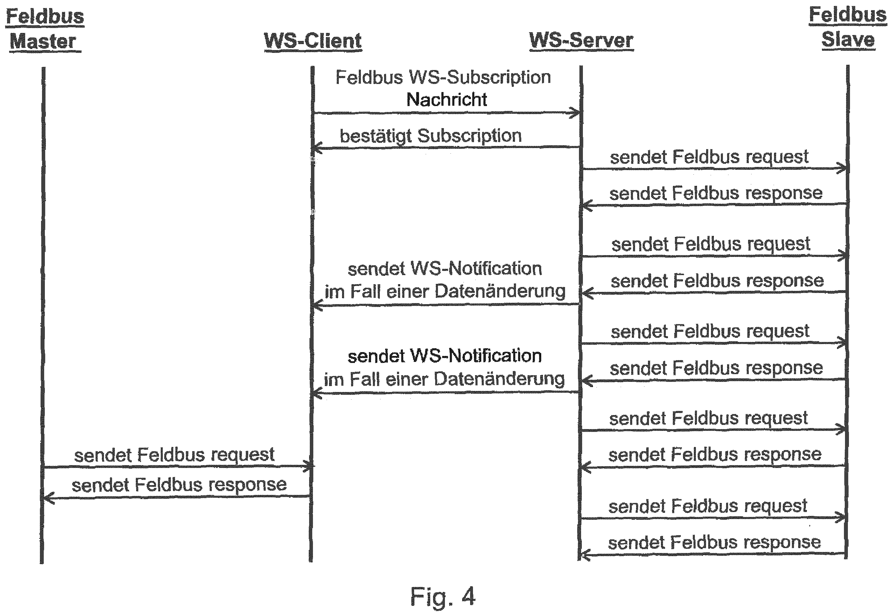

Fig. 4 zeigt beispielhaft eine Sequenz eines Datenaustauschs mit Daten-Aktualisierung und Datenbank-Abfrage unter Verwendung von Web-Service-Datenaustausch-Prinzipien. Der Web-Service-Client WSC abonniert entsprechende Daten von dem Feldbus-Slave FBS durch Aussenden einer Web-Service-Subscription-Nachricht WS-SUB, die von dem Web-Service-Server WSS durch eine Bestätigung-Nachricht ACK-SUB bestätigt wird. Im Falle einer erfolgreichen Bestellung fragt der Web-Service-Server WSS periodisch die entsprechenden Daten von dem Feldbus-Slave FBS über entsprechende Feldbus-Anfragen FBS-Request FBS-REQ ab.

Wenn sich die Daten seit der letzten Anfrage geändert haben, sendet der Web-Service-Server WSS eine Web-Service-Notification-Nachricht WS-NOT zu den Web-Service-Client WSC einschließlich der geänderten Daten. Der Web-Service-Client WSC aktualisiert die Daten in der Datenbank DB mit den empfangenen Daten. Somit ist der Web-Service-Client WSC zu jeder Zeit über die letzten Änderungen informiert. Sendet der Feldbus-Master FBM eine Feldbus-Anfrage FBM-Request FBM-REQ an den Web-Service-Client WSC, kann der Web-Service-Client WSC diese Feldbus-Anfrage FBM-Request FBM-REQ direkt unter Verwendung der Daten aus der Datenbank DB beantworten, ohne dass die Daten erneut von dem Feldbus-Slave FBS angefragt werden müssen.

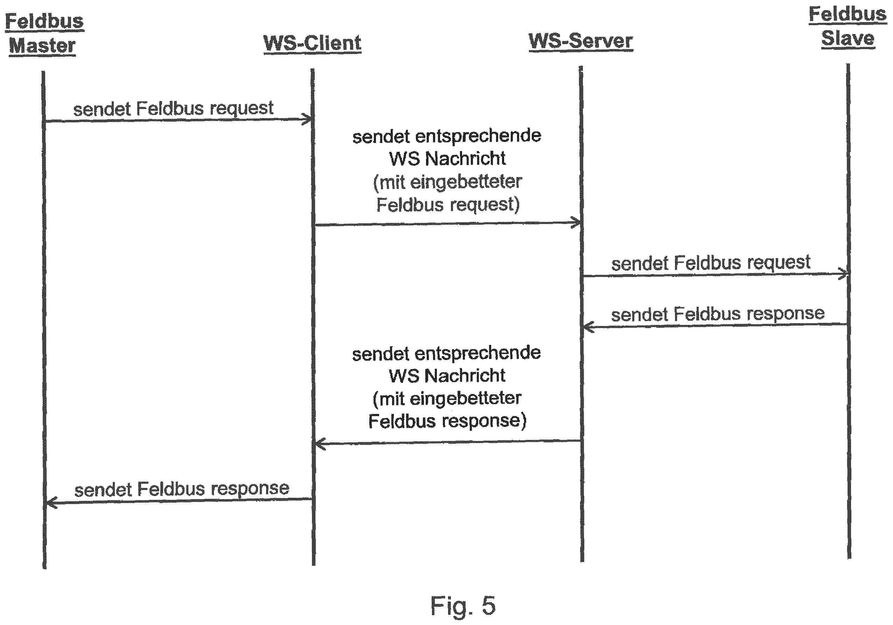

Fig. 5 zeigt eine Sequenz eines Datenaustauschs unkonfigurierter Daten, was bedeutet, dass die Daten in der Datenbank DB des Web-Service-Clients WSC nicht vorliegen. Es können zwei Gründe vorliegen, warum die Daten nicht vorliegen: entweder sind die Daten in der Datenbank DB nicht konfiguriert oder die Daten sind konfiguriert, wurden jedoch bisher von dem Feldbus-Slave FBS nicht gelesen.

Wenn eine von dem Feldbus-Master FBM stammende Anfrage FBM-Request FBM-REQ von dem Web-Service-Client WSC empfangen wird und die Daten in der Datenbank DB des Web-Service-Client WSC nicht vorliegen, initiiert der Web-Service-Client WSC eine entsprechende Web-Service-Nachricht und sendet diese zu dem Web-Service-Server WSS, der diese in eine entsprechende Feldbus-Nachricht des Feldbus-Slaves FBS transformiert. Diese Feldbus-Anfrage wird zu dem Feldbus-Slave FBS gesendet, welcher die notwendigen Daten zu dem Web-Service-Server WSS als Antwort sendet. Der Web-Service-Server WSS generiert aus diesen Feldbus-Daten eine Web-Service-Nachricht, die zu dem Web-Service-Client WSC zurückgesendet wird, um die Feldbus-Daten zu dem Feldbus-Master FBM zurückzusenden.

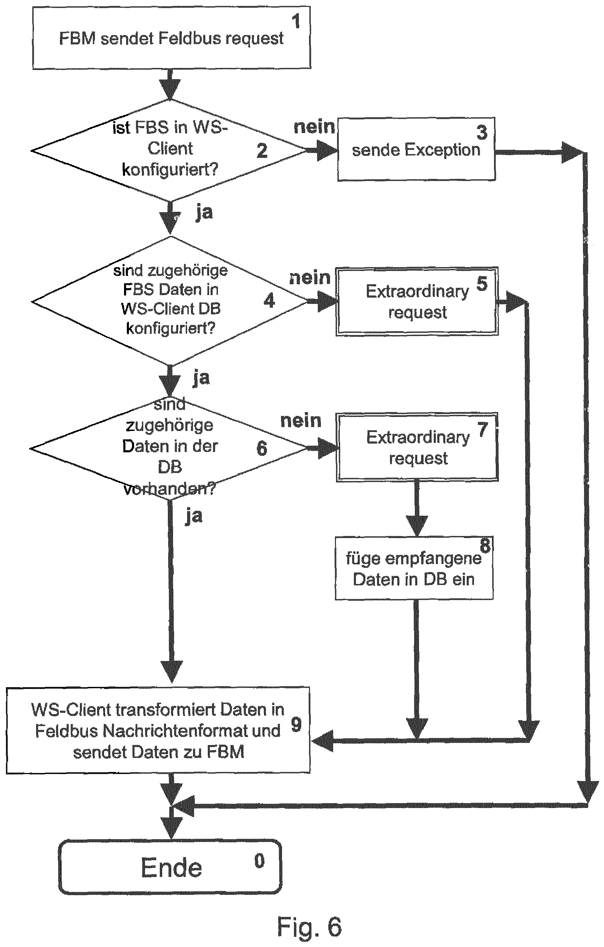

Die Fig. 6 bis 8 zeigen Ablaufdiagramme des Datenaustauschs für die jeweiligen Datenaustauschmechanismen.

Fig. 6 zeigt ein Ablaufdiagramm einer Datenaustauschsequenz. In einem ersten Verfahrensschritt S1 sendet der Feldbus-Master FBM eine Feldbus-Anfrage FBM-REQ betreffend Daten eines Feldbus-Slaves FBS. In einem zweiten Verfahrensschritt S2 wird zunächst überprüft, ob der angefragte Feldbus-Slave FBS in der Datenbank DB des Web-Service-Clients WSC konfiguriert ist. Sollte der Feldbus-Slave FBS nicht konfiguriert sein, wird in Verfahrensschritt S3 eine Nachricht "Exception" zu dem Feldbus-Master FBM zurückgesendet.

Des Weiteren prüft der Web-Service-Client WSC im Verfahrensschritt S4, ob die angefragten Daten in der Datenbank DB konfiguriert sind. Wenn die Daten des Feldbus-Slave FBS nicht konfiguriert sind, wird in Verfahrensschritt S5 eine Anfrage für einen Datenaustausch erzeugt.

In dem Fall, wenn die Daten des Feldbus-Slave FBS in der Datenbank DB konfiguriert sind, wird anschließend in Verfahrensschritt S6 geprüft, ob die angeforderten Daten ebenfalls in der Datenbank DB verfügbar sind. Wenn die Daten in der Datenbank DB des Web-Service-Client WSC nicht verfügbar sind, wird in Verfahrensschritt S7 die Anfrage für den Datenaustausch unkonfigurierter Daten ausgeführt, wobei im Unterschied zu Verfahrensschritt S5 die von dem Feldbus-Slave abgefragten Daten in die Datenbank DB eingefügt werden (Verfahrensschritt S8).

Wenn die Daten bereits in der Datenbank DB vorliegen, kann der Web-Service-Client WSC diese von der Datenbank DB unmittelbar lesen und in entsprechende Feldbus-Nachrichten transformieren und zu dem Feldbus-Master FBM senden (Verfahrensschritt S9).

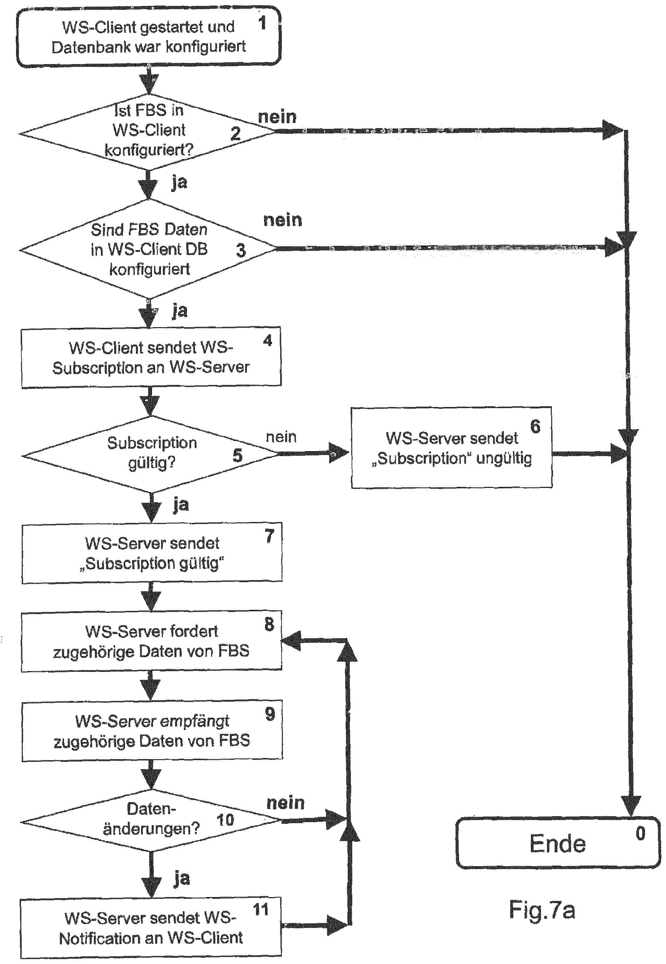

Fig. 7a zeigt ein Ablaufdiagramm der Datenaustauschsequenz für konfigurierte Daten. In einem ersten Verfahrensschritt S1 wird der Web-Service-Client WSC gestartet und die Datenbank DB konfiguriert.

In einem Verfahrensschritt S2 wird geprüft, ob der Feldbus-Slave FBS in der Datenbank DB des Web-Service-Client WSC konfiguriert ist. Bejahendenfalls erfolgt in Verfahrensschritt S3 eine interne Prüfung, ob irgendwelche Daten existieren, die bezogen auf den konfigurierten Feldbus-Slave konfiguriert wurden. Wenn keine konfigurierten Daten enthalten sind, muss jede Feldbus-Master-Anfrage FBM-REQ unter Verwendung des "Extraordinary-Daten" Datenaustausch-Mechanismus beantwortet werden und der "Standard-Daten" Datenaustausch-Mechanismus kann nicht verwendet werden.

Wenn in der Datenbank DB des Web-Service-Client WSC Daten eines Feldbus-Slaves konfiguriert sind, sendet der Web-Service-Client WSC die entsprechende Nachricht WS-Subscription WS-SUB an den Web-Service-Server WSS (Verfahrensschritt S4). Der Web-Service-Server WSS prüft, ob die Nachricht WS-Subscription WS-SUB gültig ist (Verfahrensschritt S5). Anschließend sendet der Web-Service-Server WSS eine Antwort zurück und informiert den Web-Service-Client WSC über die Gültigkeit oder Ungültigkeit der Bestellung (Subscription) (Verfahrensschritt S6 und S7).

Wenn die Bestellung (Subscription) ausgeführt werden kann, startet der Web-Service-Server WSS eine Abfrage der Feldbus-Slaves FBS und fragt die angeforderten Daten von dem Feldbus-Slave in Verfahrensschritt S8 ab. Nach Empfang der Antwort des Feldbus-Slaves in Verfahrensschritt S9 prüft der Web-Service-Server WSS in Verfahrensschritt S10, ob sich die Daten seit der letzten Anfrage geändert haben. In dem Fall, wenn sich die Daten nicht geändert haben, fragt der Web-Service-Server WSS die Daten nochmals mit einer konfigurierten Abfrageperiode in Verfahrensschritt S8 ab. In dem Fall, in dem sich die Daten geändert haben, sendet der Web-Service-Server WSS eine Nachricht WS-Notification WS-NOT an den Web-Service-Client WSC und informiert den Web-Service-Client über die Änderung, der wiederum die Daten in seiner Datenbank DB aktualisiert (Verfahrensschritt S11).

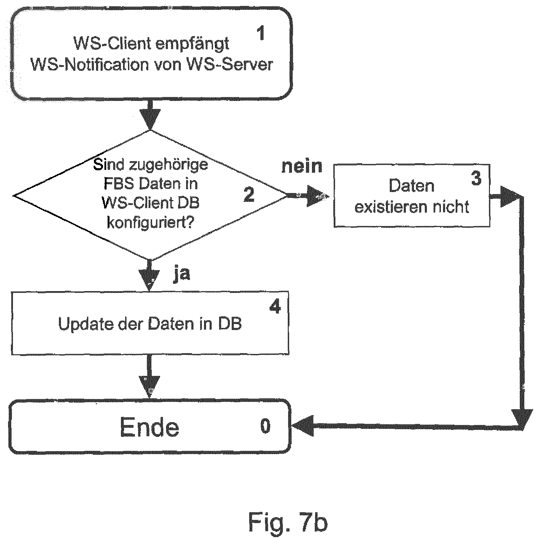

Fig. 7a zeigt einen zweiten Teil der "Standard-Daten"-Datenaustauschsequenz. Fig. 7b zeigt das Gegenstück der Variante des "Standard-Daten"-Datenaustauschs gemäß Fig. 7a. Nach Empfang einer Nachricht WS-Notification WS-NOT von dem Web-Service-Server WSS in Verfahrensschritt S1 prüft der Web-Service-Client WSC in Verfahrensschritt S2, ob die enthaltenen Daten in der Datenbank DB konfiguriert sind. Falls dies nicht der Fall ist, werden die Daten in Verfahrensschritt S3 abgelegt/verworfen. Andernfalls werden die empfangenen Daten in der Datenbank DB im Verfahrensschritt S4 für eine mögliche Anfrage durch Feldbus-Master FBM aktualisiert.

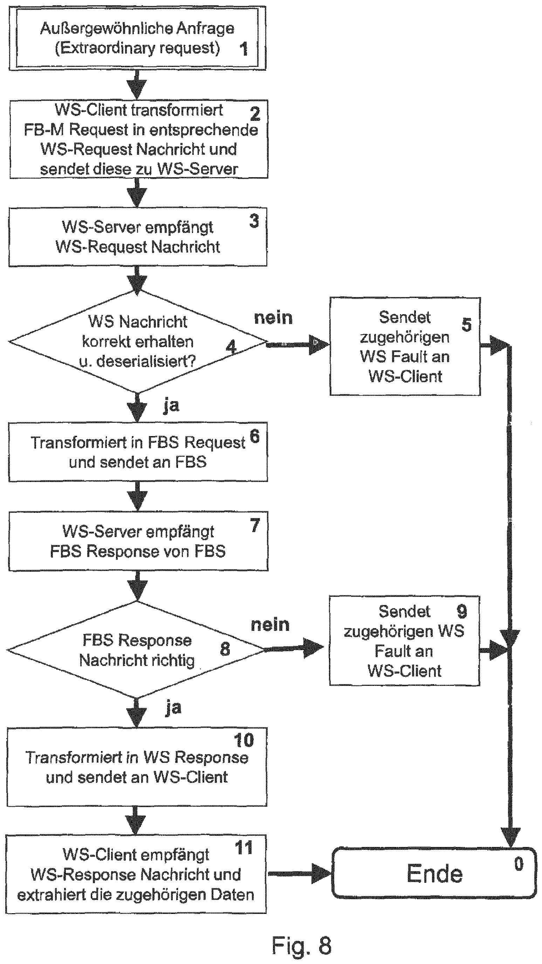

Fig. 8 zeigt rein schematisch ein Ablaufdiagramm einer "Extraordinary-Daten" Datenaustauschsequenz. Wenn alle Vorbedingungen für einen "Extraordinary-Daten" Datenaustausch in Verfahrensschritt S1 gemäß dem Ablaufdiagramm in Fig. 6 erfüllt sind, dann startet die Sequenz in Verfahrensschritt S2. In Verfahrensschritt S2 transformiert der Web-Service-Client WSC die empfangene Feldbus-Anfrage des Feldbus-Masters FBM in die entsprechende Nachricht WS-Request WS-REQ und sendet diese zu dem Web-Service-Server WSS.

Der Web-Service-Server WSS empfängt die Nachricht WS-REQ in Verfahrensschritt S3 und prüft, ob diese zutreffend seriell-parallel gewandelt (deserialized) und empfangen werden kann (Verfahrensschritt S4). Anschließend sendet der Web-Service-Server WSS eine entsprechende Nachricht WS-Fault in Verfahrensschritt S5 an den Web-Service-Client WSC oder andernfalls transformiert der Web-Service-Server die Nachricht WS-Request WS-REQ in eine Feldbus-Anfrage und sendet diese zu dem Feldbus-Slave FBS in Verfahrensschritt S6.

Der Feldbus-Slave FBS verarbeitet die Anfrage und sendet die Antwort zu dem Web-Service-Server WSS in Verfahrensschritt S7 zurück, der in Verfahrensschritt S8 wiederum überprüft, ob die Feldbus-Antwort fehlerhaft war. In diesem Fall wird ebenfalls eine entsprechende Nachricht WS-Fault zu dem Web-Service-Client WSC in Verfahrensschritt S9 gesendet.

Der Web-Service-Server WSS transformiert die Feldbus-Antwort wieder in eine Nachricht WS-RES und sendet diese in Verfahrensschritt S10 zu dem Web-Service-Client WSC. Der Web-Service-Client WSC empfängt die Nachricht WS-Response WS-RES und extrahiert die entsprechenden Daten in Verfahrens schritt S 11.

## Patentansprüche

1. Verfahren zum Austausch von gerätespezifischen Daten zwischen Feldbus-Geräten (FBS) eines ersten Feldbusses (FB1) und einem Feldbus-Gerät (FBM) eines zweiten Feldbusses (FB2), wobei der erste Feldbus (FB1) über ein erstes Gateway (G1) und der zweite Feldbus (FB2) über ein zweites Gateway (G2) mit einem gemeinsamen Ethernet-Netzwerk (EN) in Kommunikationsverbindung steht, wobei die Kommunikation über das Ethernet-Netzwerk (EN) nach dem Client-Server-Kommunikationsprinzip erfolgt, wobei das erste Gateway (G1) ethernetseitig als Web-Service-Server (WSS) und wobei das zweite Gateway (G2) ethernetseitig als Web-Service-Client (WSC) reagiert,
wobei die Kommunikation zwischen dem ersten Gateway (G1) und dem zweiten Gateway (G2) über ein Web-Service-Protokoll ausgeführt wird, wobei eine dem Feldbus-Gerät (FBM) des zweiten Feldbusses (FB2) an das zweite Gateway (G2) gesendete Feldbus-Nachricht (FBM-REQ) in dem zweiten Gateway (G2) in eine Web-Service-Nachricht (WS-SUB, WS-REQ) transformiert wird und wobei die Web-Service-Nachricht (WS-SUB, WS-REQ) über das Ethernet-Netzwerk (EN) übertragen und durch das erste Gateway (G1) empfangen und in eine Feldbus-Nachricht (FBS-REQ) des ersten Feldbusses (FB1) transformiert und den Feldbus-Geräten (FBS) zugesendet wird,
**dadurch gekennzeichnet,**
**dass** die Feldbus-Geräte als Feldbus-Slaves (FBS) und deren Konfigurationsdaten sowie aktuelle Gerätedaten in einer Datenbank (DB) des Web-Service-Client (WSC) konfiguriert werden, dass der Web-Service-Client (WSC) eine Liste benötigter Gerätedaten an den Web-Service-Server (WSS) überträgt, dass die benötigten Gerätedaten der Feldbus-Slaves (FBS) durch eine Feldbus-Anfrage FBS-Request des feldbusseitig als Feldbus-Master agierenden ersten Gateways nach dem Polling-Verfahren abgefragt werden, dass der Web-Service-Server (WSS) nach einem Ereignis-Mechanismus nur Änderungen von Datenwerten als eine in das Web-Service-Protokoll eingebettete Feldbus-Nachricht an den Web-Service-Client (WSC) zurücksendet, wobei in dem Web-Service-Client (WSC) auf der Grundlage der geänderten Datenwerte eine Aktualisierung der Datenbank (DB) erfolgt und dass das feldbusseitig als Feldbus-Slave agierende zweite Gateway auf eine Feldbus-Anfrage FBM-Request des Feldbus-Masters (FBM) unmittelbar mit den aktuellen Gerätedaten aus der Datenbank (DB) mit einer Feldbus-Antwort FBM-Response antwortet.

2. Verfahren nach zumindest einem der vorhergehenden Ansprüche,
**dadurch gekennzeichnet,**
**dass** dann, wenn die Datenbank (DB) keine Daten der Feldbus-Slaves konfiguriert hat und/oder keine benötigten Datenwerte enthält, eine Feldbus-Anfrage des Feldbus-Masters (FBM) in dem Web-Service-Client (WSC) in eine Web-Service-Request-Nachricht (WS-REQ) transformiert wird, dass die Web-Service-Request-Nachricht in dem Web-Service-Server (WSS) in eine Feldbus-Anfrage (FBS-REQ) transformiert wird, um die Feldbus-Slaves (FBS) nach entsprechenden Daten anzufragen und an den Feldbus-Master (FBM) zurückzusenden.

3. Verfahren nach zumindest einem der vorhergehenden Ansprüche,
**dadurch gekennzeichnet,**
**dass** als Web-Service-Protokoll ein SOAP-Protokoll verwendet wird.

4. Bussystem (FBS) zum Austausch von gerätespezifischen Daten zwischen Feldbus-Geräten (FBS) eines ersten Feldbusses (FB1) und zumindest einem Feldbus-Gerät (FBM) eines zweiten Feldbusses (FB2), wobei der erste Feldbus (FB1) über ein erstes Gateway (G1) und der zweite Feldbus (FB2) über ein zweites Gateway (G2) mit einem gemeinsamen Ethernet-Netzwerk (EN) gekoppelt ist,
wobei das erste Gateway (G1) ethernetseitig als Web-Service-Server (WSS) und das zweite Gateway (G2) ethernetseitig als Web-Service-Client (WSC) ausgebildet ist, wobei jedes der Gateways (G1, G2) ein Datentransformations-Modul (DTM) zur Transformation der empfangenen Feldbus-Nachrichten in Web-Service-Nachrichten und zur Transformation empfangener Web-Service-Nachrichten in Feldbus-Nachrichten aufweist,
**dadurch gekennzeichnet,**
**dass** der Web-Service-Client (WSC) eine Datenbank (DB) aufweist, in der Konfigurationsdaten und benötigte Gerätedaten der als Feldbus-Slaves (FBS) ausgebildeten Feldbus-Geräte sowie aktuelle Datenwerte der benötigten Gerätedaten speicherbar sind, dass die Gerätedaten der Feldbus-Slaves (FBS) durch das feldbusseitig als Feldbus-Master ausgebildete erste Gateway (G1) nach dem Polling-Verfahren abrufbar sind, dass in dem Web-Service-Server (WSS) und dem Web-Service-Client (WSC) jeweils Ereignis-Mechanismen (Eventing-Mechanism) zum Austausch der aktuellen Datenwerte der Konfigurationsdaten sowie der benötigten Gerätedaten implementiert sind und dass das feldbusseitig als Feldbus-Slave (FBS) agierende zweite Gateway (G2) dahingehend konfiguriert ist, auf eine Anfrage des Feldbus-Masters (FBM) unmittelbar mit den aktuellen Gerätedaten aus der Datenbank (DB) zu antworten.

5. Feldbussystem nach Anspruch 4,
**dadurch gekennzeichnet,**
**dass** die Web-Service-Server-Funktionalität in einem Feldbus-Master (FBM) des ersten Feldbusses (FB1) implementiert ist, sofern die Feldbus-Technologie des Feldbusses (FB1) nur Single-Master unterstützt und/oder dass die Web-Service-Server-Funktionalität in den Feldbus-Geräten bzw. Feldbus-Systemen implementiert ist, welche Master-Funktionalität aufweisen, in dem Multi-Master durch die Feldbus-Technologie wie beispielsweise CAN-Technologie erlaubt ist.

6. Feldbussystem nach zumindest einem der Ansprüche 4 oder 5,
**dadurch gekennzeichnet,**
**dass** die Web-Service-Server-Funktionalität in einem Feldbus-Slave (FBS) des ersten Feldbusses (FB1) implementiert ist, wobei dieser Web-Service-Server nur explizit diesen einen Feldbus-Slave unterstützt.

## Claims

1. A method for the interchange of device-specific data between fieldbus devices (FBS) of a first fieldbus (FB1) and a fieldbus device (FBM) of a second fieldbus (FB2), the method comprising: connecting the first fieldbus (FB1) for a communication via a first gateway (G1) to a common Ethernet Network (EN); connecting the second fieldbus (FB2) for a communication via a second gateway (G2) to the common Ethernet network (EN); wherein the communication via the Ethernet network (EN) occurs according to the client server communication principle; wherein the first gateway (G1) reacts on the Ethernet Network side as a web service server (WSS) and wherein the second gateway (G2) reacts on the Ethernet Network side as a web service client (WSC),
wherein the communication between the first gateway (G1) and the second gateway (G2) occurs via a web service protocol, wherein a fieldbus message (FBM-REQ) transmitted by the fieldbus device (FBM) of the second fieldbus (FB2) to the second gateway (G2) is transformed in the second gateway (G2) into a web service message (WS-SUB; WS-REQ), and wherein the web service message (WS-SUB; WS-REQ) is transmitted via the Ethernet network (EN) and received by the first gateway (G1) and transformed into a fieldbus message (FBS-REQ) of the first fieldbus (FB1) and transmitted to the fieldbus devices (FBS),
charactericed in,
that the fieldbus devices are configured as fieldbus slaves (FBS) and the configuration data thereof and current device data are configured and stored in a database (DB), wherein the database (DB) is implemented in the web service client (WSC), that the web service client (WCS) transmits a list of device data necessary to the web service server (WSS), that the necessary device data of the fieldbus slaves (FBS) are requested by a fieldbus request FBS-request by the first gateway, acting as fieldbus master at the fieldbus side, by using a polling method, that the web service server returns only changes of data values as a fieldbus massage embedded in the web service protocol according to an eventing mechanism to the web service client, wherein the data of the database are updated in the web service client on the basis of the change data values and that the second gateway reacting as fieldbus slave at the fieldbus side responds immediately with a filebus response FBM-Response to a fieldbus query FBM-Request of the fieldbus master (FBM) with the current device data from the database.

2. The method according to at least one of the previous claims,
**characterised in,**
**that** if the database has not configured any data of the fieldbus slaves and/or contains no necessary data values, a fieldbus query of the fieldbus master is transformed in the web service client into a web service request message, in that the web service request message is transformed in the web service server into a fieldbus query, in order to request corresponding data from the fieldbus slaves and return said data to the fieldbus master.

3. The method according to at least one of the previous claims,
**characterised in,**
**that** a SOAP protocol is used as web service protocol.

4. A bus system for the interchange of device-specific data between fieldbus devices of a first fieldbus and at least one fieldbus device of a second fieldbus, the system comprising: the first fieldbus connected via a first gateway to a common Ethernet network; and the second fieldbus connected via a second gateway to the common Ethernet network;
wherein the first gateway (G1) reacts on the Ethernet Network side as a web service server (WSS) and wherein the second gateway (G2) reacts on the Ethernet Network side as a web service client (WSC), wherein each one of the gateways (G1, G2) comprises a data transformation module (DTM) for the transformation of the received fieldbus messages into web service messages and for the transformation of received web service messages into fieldbus messages,
**characterised in,**
**that** the web service client (WSC) comprises a database, in which configuration data and necessary device data of the fieldbus devices designed as fieldbus slaves as well as current data values of the necessary device data are storable, that the device data of the fieldbus slaves (FBS) are requestable by the first gateway (G1), acting as fieldbus master at the fieldbus side, by using a polling method, that in the web service server (WSS) and in the web service client (WSC) eventing mechanisms are implemented in each case for the interchange of the current data values of the configuration data as well as of the necessary data of the fieldbus slaves and that the second gateway (G2), acting as fieldbus slave (FBS) on the fieldbus side, is configured to respond to a response of the fieldbus master (FBM) immediate with the current device data of the database (DB).

5. The fieldbus system according to claim 4,
**characterised in,**
**that** the web service server functionality is implemented in a fieldbus master of the first fieldbus, if the fieldbus technology of the fieldbus supports only single-master and/or in that the web service server functionality is implemented in the fieldbus devices or fieldbus systems that have master functionality in which multi-master is allowed by the fieldbus technology such as CAN technology, for example.

6. The fieldbus system according to claim 4 or 5,
**characterised in,**
**that** the web service server functionality is implemented in a fieldbus slave of the first fieldbus, wherein this web service server supports only this one fieldbus slave explicitly.

## Revendications

1. Procédé d'échange de données spécifiques aux appareils entre des appareils à bus de terrain (FBS) d'un premier bus de terrain (FB1) et un appareil à bus de terrain (FBM) d'un second bus de terrain (FB2), sachant que le premier bus de terrain (FB1) communique avec un réseau Ethernet commun (EN) par le biais d'une première passerelle (G1) et le second bus de terrain (FB2) par le biais d'une seconde passerelle (G2), sachant que la communication via le réseau Ethernet (EN) a lieu selon le principe de communication client-serveur, sachant que la première passerelle (G1) réagit côté Ethernet comme serveur de service web (WSS) et sachant que la seconde passerelle (G2) réagit côté Ethernet comme client de service web (WSC),
sachant que la communication entre la première passerelle (G1) et la seconde passerelle (G2) est exécutée par le biais d'un protocole de service web, sachant qu'un message de bus de terrain (FBM-REQ) envoyé à l'appareil à bus de terrain (FBM) du second bus de terrain (FB2) à la seconde passerelle (G2) est transformé en un message de service web (WS-SUB, WS-REQ) dans la seconde passerelle (G2) et sachant que le message de service web (WS-SUB, WS-REQ) est transmis via le réseau Ethernet (EN) et reçu par la première passerelle (G1) et transformé en un message de bus de terrain (FBS-REQ) du premier bus de terrain (FB1) et envoyé aux appareils à bus de terrain (FBS),
**caractérisé en ce**
**que** les appareils de bus de terrain en tant qu'esclaves bus de terrain (FBS) et leurs données de configuration ainsi que les données d'appareils actuelles sont configurés dans une base de données (DB) du client de service web (WSC), que le client de service web (WSC) transmet une liste des données d'appareils au serveur de service web (WSS), que les données d'appareils requises des esclaves bus de terrain (FBS) sont interrogées par procédé de scrutation par le biais d'une demande de bus de terrain, FBS-Request de la première passerelle agissant comme maître bus de terrain côté bus de terrain, que le serveur de service web (WSS) ne renvoie au client de service web (WSC), selon un mécanisme de gestion des événements, que les modifications des valeurs de données sous forme de message de bus de terrain intégré dans le protocole de service web, sachant que dans le client de service web (WSC), une mise à jour de la base de données (DB) a lieu sur la base des valeurs de données modifiées et que la seconde passerelle agissant comme esclave bus de terrain côté bus de terrain répond à une demande de bus de terrain, FBM-Request du maître bus de terrain (FBM) par une réponse de bus de terrain, FBM-Response, directement avec les données d'appareils actuelles provenant de la base de données (DB).

2. Procédé selon au moins une des revendications précédentes,
**caractérisé en ce**
**que**, si la base de données (DB) n'a configuré aucune donnée de l'esclave bus de terrain et/ou ne contient aucune valeur de données requise, une demande de bus de terrain du maître bus de terrain (FBM) est transformée en un message Request de service web (WS-REQ) dans le client de service web (WSC), que le message Request de service web est transformé en une demande de bus de terrain (FBS-REQ) dans le serveur de service web (WSS) pour demander les données correspondantes aux esclaves bus de terrain (FBS) et les renvoyer au maître bus de terrain (FBM).

3. Procédé selon au moins une des revendications précédentes,
**caractérisé en ce**
**qu'**un protocole SOAP est utilisé comme protocole de service web.

4. Système de bus (FBS) pour échanger des données spécifiques aux appareils entre des appareils à bus de terrain (FBS) d'un premier bus de terrain (FB1) et au moins un appareil à bus de terrain (FBM) d'un second bus de terrain (FB2), sachant que le premier bus de terrain (FB1) est couplé à un réseau Ethernet commun (EN) par le biais d'une première passerelle (G1) et le second bus de terrain (FB2) par le biais d'une seconde passerelle (G2),
sachant que la première passerelle (G1) est conçue côté Ethernet sous forme de serveur de service web (WSS) et que la seconde passerelle est conçue côté Ethernet sous forme de client de service web (WSC), sachant que chacune des passerelles (G1, G2) présente un module de transformation de données (DTM) servant à transformer les messages de bus de terrain reçus en messages de service web et à transformer les messages de service web reçus en messages de bus de terrain,
**caractérisé en ce**
**que** le client de service web (WSC) présente une base de données (DB) dans laquelle sont enregistrables des données de configuration et des données d'appareils requises des appareils à bus de terrain conçus sous forme d'esclaves bus de terrain (FBS) ainsi que des valeurs actuelles des données d'appareils requises, que les données d'appareils des esclaves bus de terrain (FBS) sont interrogeables par procédé de scrutation par le biais de la première passerelle (G1) conçue comme maître bus de terrain côté bus de terrain, que dans le serveur de service web (WSS) et le client de service web (WSC), des mécanismes respectifs de gestion des événements (eventing mechanism) sont implémentés pour échanger les valeurs actuelles des données de configuration et des données d'appareils requises et que la seconde passerelle (G2) agissant comme esclave bus de terrain (FBS) côté bus de terrain est configurée dans le but de répondre à une demande du maître bus de terrain (FBM) directement par les données d'appareils actuelles provenant de la base de données (DB).

5. Système de bus de terrain selon la revendication 4,
**caractérisé en ce**
**que** la fonctionnalité de serveur de service web est implémentée dans un maître bus de terrain (FBM) du premier bus de terrain (FB1) dans la mesure où la technologie de bus de terrain du bus de terrain (FB1) ne prend en charge que le mode Single Master et/ou que la fonctionnalité de serveur de service web est implémentée dans les appareils à bus de terrain ou les systèmes de bus de terrain qui présentent une fonctionnalité de maître dans laquelle le mode Multi-Master est autorisé par la technologie du bus de terrain comme par exemple la technologie CAN.

6. Système de bus de terrain selon au moins une des revendications 4 ou 5,
**caractérisé en ce**
**que** la fonctionnalité de serveur de service web est implémentée dans un esclave bus de terrain (FBS) du premier bus de terrain (FB1), sachant que ce serveur de service web ne prend en charge explicitement que cedit esclave bus de terrain.
